Europäisches Patentamt

European Patent Office

Office européen des brevets

(11) Numéro de publication: **0 253 039 B1**

(12) **FASCICULE DE BREVET EUROPEEN**

(45) Date de publication de fascicule du brevet:
03.04.91

(21) Numéro de dépôt: 86430027.2

(22) Date de dépôt: **15.07.86**

(51) Int. Cl.⁵: **H04B 7/015**, H04B 3/20

(54) **Méthode et dispositif de protection contre les échos dans un modem.**

(43) Date de publication de la demande:
20.01.88 Bulletin 88/03

(45) Mention de la délivrance du brevet:
03.04.91 Bulletin 91/14

(84) Etats contractants désignés:
DE FR GB IT

(56) Documents cités:
EP-A- 0 143 254
FR-A- 2 304 899

INTERNATIONAL JOURNAL OF ELECTRO-
NICS, vol. 43, no. 6, décembre 1977, pages
593-598, Londres, GB; G. LARSEN et al.: "An
improved receiver for baseband data communication using a digitally controlled AGC"

(73) Titulaire: **International Business Machines
Corporation
Old Orchard Road
Armonk, N.Y. 10504(US)**

(72) Inventeur: **Bigo, Firmin
55, Avenue des Chênes
F-66800 Cagnes Sur Mer(FR)**
Inventeur: **Le Maut, François
"Anjou" 201 Avenue de la Lanterne
F-06200 Nice(FR)**

(74) Mandataire: **Bonneau, Gérard
Compagnie IBM France Département de Propriété Intellectuelle
F-06610 La Gaude(FR)**

## Description

La présente invention concerne la transmission de données au moyen de signaux analogiques, et plus particulièrement une méthode de protection contre les échos reçus par le modem lors de la transmission par celui-ci de messages de données empruntant la liaison par satellite.

Dans les systèmes de transmission de données sous forme de signaux analogiques sur des lignes téléphoniques, les données se présentent sous la forme de modulations d'un signal porteur. De façon générale, le signal porteur est modulé à l'émission dans un modulateur et démodulé à la réception dans un démodulateur, l'ensemble modulateur/démodulateur étant appelé modem.

Lorsqu'une transmission de données a lieu sur une ligne téléphonique entre deux équipement 5 terminaux de données (DTE) éloignés, tout se passe comme si un modem émetteur transmettait des données vers un modem récepteur.

Un inconvénient classique rencontré dans ce type de transmission est la réception, par le modem émetteur, de l'écho du message qu'il vient de transmettre. Cet écho pourrait s'avérer gênant par les perturbations qu'il peut occasionner sur les données et par le fait qu'il peut être considéré à tort comme un message de données en provenance du modem éloigné. C'est pourquoi, les modems sont généralement équipés d'un dispositif de protection anti-écho selon la recommandation CCITT 27ter. Grâce à ce dispositif, tout écho est supprimé pendant un temps de 100 ms après la fin du message transmis par le modem émetteur.

La transmission de données numériques s'effectue généralement en utilisant des lignes louées. Lorsque, pour une raison quelconque, la ligne devient inutilisable, il est nécessaire et utile de pouvoir effectuer la transmission des données par l'intermédiaire du réseau commuté public (PSN). C'est pourquoi les modems sont quelquefois pourvus d'un dispositif de connexion au réseau commuté (SNBU).

Avec le développement des télécommunication, les liaisons téléphoniques longue distance utilisent de plus en plus les satellites géostationnaires situés à 36 000 kms de la terre. Lorsque deux modems pourvus du dispositif SNBU, se trouvent connectés au réseau PSN du fait d'une défaillance de la ligne louée qui les reliait, il est possible que l'échange des messages de données se fasse par l'intermédiaire d'un satellite géostationnaire. Dans ce cas, un rapide calcul montre que l'écho en retour d'un message transmis par le modem émetteur est reçu par ce dernier environ 500 ms après la fin de sa transmission. Dans ces conditions, le dispositif de protection anti-écho selon la recommandation CCITT 27ter n'a aucun effet. Il existe bien des dispositifs anti-écho qui équipent les lignes téléphoniques du réseau public, cf. pai exemple la demande EP-A-0143254. Mais ces dispositifs ne sont pas suffisamment efficaces, principalement lorsqu'il s'agit de transmission de données.

C'est pourquoi l'objet de l'invention est une méthode de protection contre les échos permettant à un modem de s'affranchir des échos reçus en retour des messages qu'il transmet à destination d'un modem éloigné lorsque la communication des données s'effectue par l'intermédiaire de satellites.

La méthode selon l'invention consiste à : comparer le niveau d'eneigie fourni par le dispositif de contrôle automatique de gain (AGC) lors de la réception d'un message, à une valeur de niveau déjà emmagasinée en mémoire; fournir un signal de restauration et d'adaptation des coefficients de l'égaliseur du modem lorsque le niveau fourni par le dispositif de contrôle automatique de gain est supérieur d'un écart prédéterminé à la valeur précédente emmagasinée, et dans ce cas remplacer la valeur de niveau précédente par la valeur de niveau fournie; et décoder le message reçu ainsi que tous les messages suivants dont la valeur de niveau est égale audit écart près à la valeur de niveau emmagasinée, de sorte que tous les messages reçus dont la valeur de niveau est inférieure audit écart près à ladite valeur emmagasinée, sont considérés comme des échos et ne sont donc pas pris en compte.

L'invention est maintenant décrite en référence aux dessins suivants dans lesquels :

La figure 1 représente le schéma fonctionnel du dispositif de réception d'un modem.

La figure 2 est un organigramme de la méthode selon l'invention.

La figure 3 est un bloc-diagramme représentant une réalisation de l'invention.

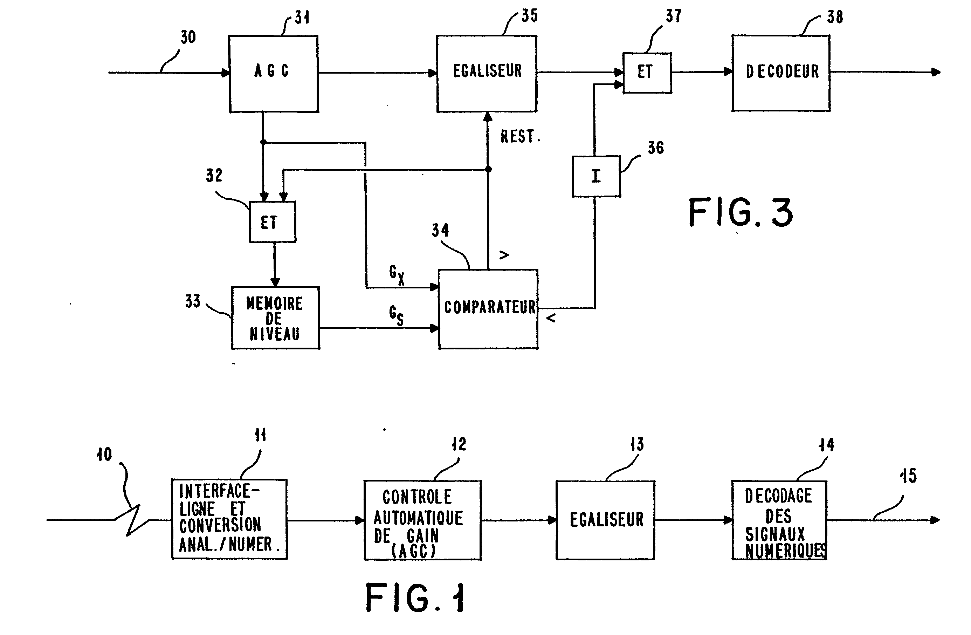

La figure 1 représente sommairement le schéma fonctionnel du dispositif de réception d'un modem, utile pour la compréhension de l'invention. Les signaux analogiques en provenance de la ligne téléphonique 10 sont d'abord traités par le dispositif 11 d'interface-ligne et de conversion analogique/numérique où, après filtrage, ils sont convertis en signaux numériques.

Le premier message de données transmis par le modem émetteur vers le modem récepteur est précédé d'une séquence d'apprentissage de dispositif de transmission composée généralement de signaux représentatifs du spectre de fréquence de la ligne et d'amplitude constante. Lorsque le dispositif de contrôle automatique de gain (AGC) 12 reçoit cette séquence, il calcule un gain dépendant de l'énergie des signaux reçus, qui va ensuite servir comme facteur multiplicateur des signaux de données. Puis la séquence d'apprentissage est fournie à l'égaliseur 13 dont les coefficients sont calculés de façon à compenser les effets de distorsion dus à la ligne téléphonique, et variables selon la fréquence. Les signaux numériques dont le niveau a ainsi été ajusté, et exempts de distorsion, sont alors transmis au dispositif de décodage 14 dans le but d'être décodés et de fournir, sur la ligne 15, les données numériques à destination de l'équipement terminal de données.

Lorsque le modem non pourvu du dispositif selon l'invention, reçoit un message qui a transité par un satellite, ce message peut être un message de données en provenance du modem éloigné, mais peut être également l'écho du message de données qu'il vient de transmettre vers le modem éloigné si, comme on l'a vu, le dispositif anti-écho du réseau public n'est pas suffisamment efficace. Dans ce dernier cas, les coefficients de l'égaliseur sont calculés à partir de la séquence d'apprentissage qui précède le message en tenant compte des distorsions en ligne subies par l'écho. Or, l'écho a subi des distorsions dues à la transmission modem émetteur vers modem récepteur puis des distorsions dues à la transmission modem récepteur vers modem émetteur, contrairement à un message vrai qui lui n'a subi que les distorsions dues à la transmission modem récepteur vers modem émetteur. Dans ces conditions, lorsqu'arrive le message vrai en provenance du modem éloigné, il subit une égalisation par l'égaliseur 13 dont les coefficients ont été calculés en tenant compte de l'écho, ce qui perturbe totalement la réception des données.

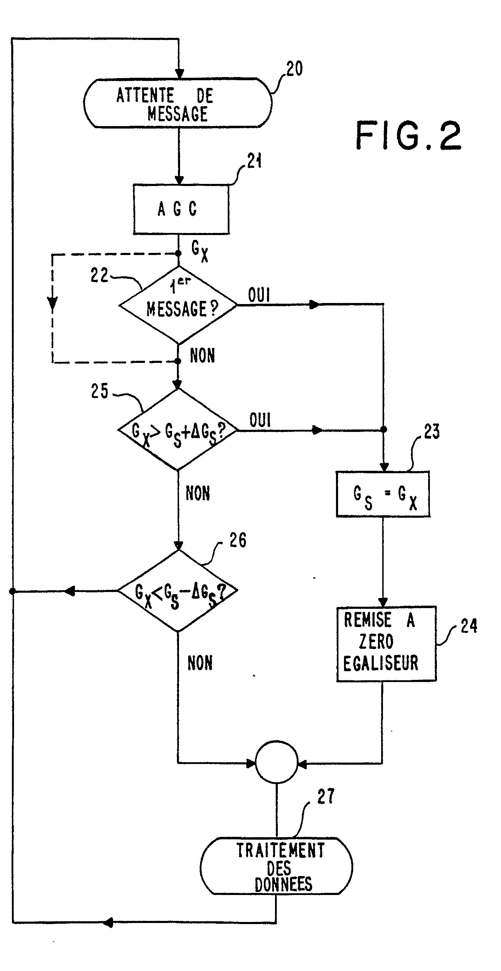

La présente invention permet de s'affranchir de cet effet indésirable de l'écho comme on va le voir en référence à la figure 2.

Supposons le modem en attente de message (bloc 20). A ce stade, il est bon de préciser que la méthode qui va suivre s'applique aussi bien au cas du modem émetteur qui attend un message provenant du modem éloigné en réponse au message qu'il vient de transmettre, qu'au cas du modem récepteur qui est en attente du message en provenance du modem émetteur.

Lorsque le modem reçoit un message, ce dernier est transmis au dispositif de contrôle automatique de gain (bloc 21) qui détermine le niveau d'énergie Gx des signaux reçus. A ce stade, il est possible d'inclure un bloc 22 pour déterminer s'il s'agit d'un premier message. S'il s'agit d'un premier message, la valeur Gx est sauvegardée en tant que valeur de seuil Gs (bloc 23), et les coefficients de l'égaliseur sont remis à zéro et prêts à être adaptés selon les signaux de la séquence d'apprentissage.

Si le message reçu n'est pas un premier message, le bloc 25 permet de déterminer si le niveau Gx est supérieur à la valeur de seuil Gs, augmentée d'un écart ΔGS. En effet, pour plusieurs messages vrais reçus du modem éloigné, les niveaux Gx peuvent varier tout en restant dans une certaine fourchette. Par contre, le niveau pour un écho est nettement inférieur au niveau pour un message vrai, la différence étant au moins égale à une valeur ΔGS prédéterminée (d'environ 7 décibels).

Si le niveau Gx est supérieur à Gs + ΔGs, c'est que le message reçu est un message vrai et que le message reçu auparavant était un écho puisque la valeur Gs sauvegardée est inférieure à Gx de plus de ΔGs. Dans ce cas, la valeur Gx devient la nouvelle valeur Gs sauvegardée, les coefficients de l'égaliseur sont remis à zéro et ajustés en tenant compte de la séquence d'apprentissage qui précède ce message.

Il est à noter que le bloc 22 de détermination de premier message n'est pas indispensable mais simplement commode pour sauvegarder une première valeur Gs. On peut s'en dispenser comme le montre la ligne en pointillés, auquel cas la valeur Gs initiale est la valeur nulle.

Ensuite, au bloc 26, il est déterminé si la valeur Gx est inférieure à Gs à l'écart ΔGs près. Si le message reçu est un écho, cette condition est vérifiée, auquel cas le message n'est pas pris en considération. La méthode est alors rebouclée au bloc 20 d'attente d'un nouveau message. Si par contre, c'est un message vrai, la valeur Gx est égale à la valeur emmagasinée Gs à l'écart ΔGs près et la condition du bloc 26 n'est pas vérifiée. Le message correspondant est ensuite traité (bloc 27) et la méthode reboucle au bloc 20 pour attente de message.

Si le modem considéré ici est le modem récepteur, le premier message reçu est le message vrai en provenance du modem émetteur. Par conséquent, dès ce message, les coefficients de l'égaliseur sont ajustés correctement et la valeur Gs emmagasinée ne sera plus modifiée puisque les seules valeurs Gx différentes (à ΔGs près) que le dispositif automatique de gain déterminera ensuite, correspondront à des échos.

La méthode de l'invention qui vient d'être décrite en référence à la figure 2, peut être réalisée facilement par un programme mis en oeuvre par le processeur qui gère une grande partie des traitements effectués dans les modems commercialisés actuellement.

Mais la méthode de l'invention peut aussi être réalisée à l'aide de circuits logiques, c'est-à-dire réalisée en matériel et non en logiciel. Ainsi, la figure 3 est un exemple d'une telle réalisation.

Comme on l'a vu précédemment, les signaux numériques fournis sur la ligne 30, sont traités par le dispositif de contrôle automatique de gain (AGC) 31 avant d'être transmis à l'égaliseur 35. Mais, auparavant le dispositif AGC 31 a fourni le niveau Gx à l'entrée du comparateur 34, l'autre entrée du comparateur étant la valeur Gs emmagasinée dans la mémoire de niveau 33. Si la valeur Gx est supérieure à la valeur Gs d'au moins l'écart ΔGs, le comparateur fournit un signal haut de restauration à l'égaliseur de sorte que les coefficients de l'égaliseur sont remis à zéro et calculés en utilisant les signaux numériques de la séquence d'apprentissage. En même temps ce signal sert d'entrée au circuit ET 32, ce qui permet à la valeur Gx d'être emmagasinée en tant que nouvelle valeur Gs dans la mémoire de niveau 33 à la place de la valeur précédente.

Lorsque la valeur Gx calculée par le dispositif AGC 31 est inférieure à la valeur emmagasinée Gs d'au moins l'écart ΔGs, le comparateur 34 fournit un signal haut vers l'inverseur 36 qui lui même fournit en sortie un signal bas bloquant le circuit ET 37. De la sorte, le message reçu qui est en fait un écho n'est pas transmis au décodeur 38 pour traitement.

Si le niveau Gx est égal, à l'écart ΔGs près, à la valeur Gs emmagasinée dans la mémoire de niveau 33, le comparateur 34 ne transmet pas de signal en sortie. Ainsi, l'égaliseur n'est pas restauré, les signaux de données sont traités par l'égaliseur dont les coefficients ont déjà été ajustés, avant d'être fournis au décodeur 38 par l'intermédiaire du circuit ET 37 rendu passant par la sortie haute de l'inverseur 36. Il est à noter que le circuit ET 37 est également passant lorsque le niveau Gx est supérieur, d'au moins l'écart Gs, à la valeur Gs. Mais dans ce cas, les signaux de données ont été traités par l'égaliseur 35, dont les coefficients ont été ajustés en tenant compte de la séquence d'apprentissage qui précède les données puisque le comparateur 34 a fourni un signal de restauration à l'égaliseur 35.

L'organigramme de la figure 2 ainsi que le schéma fonctionnel de l'invention qui vient d'être décrit en référence à la figure 3, peuvent être mis en oeuvre de diverses manières à la portée de l'homme du métier sans qu'il soit nécessaire d'en donner des exemples détaillés dans cette description.

**Revendications**

1. Méthode de protection contre les échos dans un premier modem lors d'une communication à longue distance, notamment par satellite, avec un second modem, ledit premier modem comprenant un dispositif de contrôle automatique de gain AGC (31) pour adapter les éléments du modem au niveau d'énergie des signaux reçus, et un égaliseur (35) pour égaliser lesdits signaux; ladite méthode étant caractérisé par les étapes consistant à :

- comparer (25,26), pour un message reçu en provenance dudit second modem, le niveau Gx fourni par ledit dispositif AGC avec une valeur Gs préalablement sauvegardée.
- fournir un signal de restauration (24) audit égaliseur de façon à procéder a l'ajustement de ses coefficients et sauvegarder (23) le niveau Gx comme nouvelle valeur Gs, au cas où ledit niveau Gx du message reçu dépasse ladite valeur Gs d'un écart prédéterminé, et
- décoder (27) le message reçu ainsi que tous les messages suivants dont le niveau fourni par ledit dispositif AGC est supérieur ou égal audit écart prédéterminé près à la valeur Gs sauvegardée, de sorte que tous les messages reçus dont le niveau Gx est inférieur audit écart près à ladite valeur Gs, sont considérés comme des échos et ne sont pas pris en compte.

2. Méthode selon la revendication 1 comportant en outre l'étape consistant à sauvegarder en tant que valeur Gs, le niveau Gx du premier message reçu par ledit premier modem sans détermination qu'il s'agit d'un écho ou d'un message vrai.

3. Dispositif de protection contre les échos dans un modem comprenant un dispositif de contrôle automatique de gain AGC (31) pour adapter les éléments du modem au niveau d'énergie Gx des signaux reçus et un égaliseur (35) pour égaliser lesdits signaux; ledit dispositif étant caractérisé en ce qu'il comprend :

- une mémoire de niveau (33) pour sauvegarder une valeur Gs, cette valeur étant nulle avant qu'un premier message ait été reçu,
- un comparateur (34) pour comparer le niveau Gx fourni ledit dispositif AGC lors de la réception d'un message avec ladite valeur Gs sauvegardée dans ladite mémoire de niveau, et fournir un signal de restauration à l'égaliseur pour remise à zéro de ses coefficients en même temps qu'un signal d'emmagasinage du niveau Gx comme nouvelle valeur Gs dans ladite mémoire de niveau lorsque le niveau Gx est supérieur d'un écart déterminé à ladite valeur Gs, ou fournir un signal d'inhibition du décodage des signaux de données lorsque le niveau Gx est inférieur d'un écart prédéterminé à ladite valeur Gs indiquant que le message reçu est un écho.

## Claims

1. A method for protecting a first modem against echoes during a long-distance communication, particularly via satellite, with a second modem, said first modem including an automatic gain control (AGC) device (31) for adapting the elements of the modem to the energy level of the received signals, and an equalizer (35) for equalizing said signals, said method being characterized in that it comprises the steps of:
   - comparing (25, 26) the level Gx provided by said AGC device for a message received from said second modem with a previously saved value Gs,
   - supplying a resetting signal (24) to said equalizer to permit adjusting the coefficients thereof and saving (23) the level Gx as a new value Gs, in the event of said level Gx for the received message exceeding said value Gs by a predetermined amount, and
   - decoding (27) the received message as well as all subsequent messages for which the level provided by said AGC device is higher than or equal to said saved value Gs, within said predetermined amount, so that all received messages for which the level Gx is less than said value Gs, within said predetermined amount, will be considered to be echoes and will be ignored.

2. A method according to claim 1, characterized in that it includes the further step of saving as value Gs the level Gx for the first message received by said first modem without determining whether an echo or a true message is involved.

3. A device for providing protection against echoes in a modem comprising an AGC device (31) for adapting the elements of the modem to the energy level Gx of the received signals and an equalizer (35) for equalizing said signals, said device being characterized in that it includes:
   - a level memory (33) for saving a value Gs, which value is zero before a first message has been received, and
   - a comparator (34) for comparing the level Gx provided by said AGC device upon receipt of a message with said value Gs saved in said level memory, and for supplying a resetting signal to the equalizer to reset the coefficients thereof to zero and, simultaneously, a signal for storing level Gx as a new value Gs in said level memory where said level Gx exceeds said value Gs by a predetermined amount, or for supplying a signal for inhibiting the decoding of the data signals where said value Gs exceeds than said level Gx by a predetermined amount, thereby indicating that the received message is an echo.

## Ansprüche

1. Verfahren zum Schützen gegen die Echos in einem ersten Modem bei einer Fernverbindung mit einem zweitem Modem, insbesondere durch einen Satelliten, wobei das erste Modem eine Einrichtung für den automatischen Schwundausgleich AGC (31) zum Anpassen der Elemente des Modems an den Energiepegel der empfangenen Signale und einen Ausgleicher (35) zum Ausgleichen der Signale aufweist, wobei das Verfahren durch die folgenden Schritte gekennzeichnet ist:
   - Vergleichen (25, 26) des von der AGC-Einrichtung gelieferten Pegels Gx mit einem vorher geschützten Wert Gs für eine empfangene Nachricht, die aus dem zweiten Modem einlangt.
   - Zuführen eines Wiederherstellungssignales (24) an den Ausgleicher so, daß die Anpassung seiner Koeffizienten durchgeführt wird und der Pegel Gx in dem Falle, wenn der Pegel Gx der empfangenen Nachricht den Wert Gs um eine vorbestimmte Spanne überschreitet wie ein neuer Wert Gs geschützt (23) wird und
   - Decodieren (27) der empfangenen Nachricht sowie aller folgenden Nachrichten, deren von der AGC-Einrichtung gelieferter Pegel bis auf die vorbestimmte Spanne dem geschützten Wert Gs gleicht oder darüber liegt, sodaß alle empfangenen Nachrichten, deren Pegel Gx bis auf die Spanne unter dem Wert Gs liegt, wie Echos betrachtet und nicht berücksichtigt werden.

2. Verfahren nach Anspruch 1, dadurch gekennzeichnet, das darüber hinaus den Schritt aufweist, der in dem Schützen des Pegels Gx der ersten, durch das erste Modem empfangenen Nachricht als ein Wert Gs besteht, ohne zu bestimmen, ob es sich um ein Echo oder eine wirkliche Nachricht handelt.

3. Einrichtung zum Schützen gegen die Echos in einem Modem, die eine Einrichtung für den automatischen Schwundausgleich AGC (31) zum Anpassen der Elemente des Modems an den Energiepegel Gx der empfangenen Signale und einen Ausgleicher (35) zum Ausgleichen der Signale aufweist, wobei die Einrichtung dadurch gekennzeichnet ist, daß sie aufweist:

- einen Pegelspeicher (33) zum Schützen eines Wertes Gs, wobei dieser Wert vor dem Empfang einer ersten Nachricht Null ist,
- einen Komparator (34) zum Vergleichen eines von der AGCEinrichtung bei dem Empfang einer Nachricht gelieferten Pegels Gx mit dem in dem Pegelspeicher geschützten Wert Gs und Zuführen eines Wiederherstellungssignales an den Ausgleicher für das Zurücksetzen seiner Koeffizienten auf Null sowie zur gleichen Zeit eines Speichersignales des Pegels Gx als einen neuen Wert Gs in dem Pegelspeicher, wenn der Pegel Gx um eine bestimmte Spanne über dem Wert Gs liegt oder Bereitstellen eines Inhibitsignales der Decodierung der Datensignale, wenn der Pegel Gx um eine vorbestimmte Spanne unter dem Wert Gs liegt, wodurch angezeigt wird, daß die empfangene Nachricht ein Echo ist.

EP 0 253 039 B1

FIG.3

FIG.1

FIG.2

ATTENTE DE MESSAGE — 20

A G C — 21

$G_X$

22 — 1$^{er}$ MESSAGE ?  OUI

NON

25 — $G_X > G_S + \Delta G_S$ ?  OUI

NON

23 — $G_S = G_X$

26 — $G_X < G_S - \Delta G_S$ ?

NON

REMISE A ZERO EGALISEUR — 24

TRAITEMENT DES DONNEES — 27